Europäisches Patentamt

European Patent Office

Office européen des brevets

(19)

(11) Veröffentlichungsnummer: **0 033 370**
**B1**

(12) **EUROPÄISCHE PATENTSCHRIFT**

(45) Veröffentlichungstag der Patentschrift:
27.07.83

(51) Int. Cl.³: **B 01 D 37/02** // B01D29/02

(21) Anmeldenummer: **80107251.3**

(22) Anmeldetag: **20.11.80**

(54) **Verfahren und Einrichtung zum Betrieb einer Anschwemm-Filtriereinrichtung mit horizontalen scheibenförmigen drehbaren Filterelementen.**

(30) Priorität: **29.11.79 CH 10611/79**

(43) Veröffentlichungstag der Anmeldung:
**12.08.81 Patentblatt 81/32**

(45) Bekanntmachung des Hinweises auf die Patenterteilung:
**27.07.83 Patentblatt 83/30**

(84) Benannte Vertragsstaaten:
**AT BE CH DE FR GB IT LI LU NL SE**

(56) Entgegenhaltungen:
**DD-A-55 322**
**DE-A-2 705 046**
**DE-B-1 057 576**

(73) Patentinhaber: **Filtrox Maschinenbau A.-G.,
Moosmühlenstrasse 6, CH-9030 St. Gallen (CH)**

(72) Erfinder: **Strub, Fritz, Lehnstrasse 73, CH-9014 St.
Gallen (CH)**

(74) Vertreter: **Steudtner, Werner, Dipl.-Ing., Lindenhof 5,
CH-8604 Hegnau (CH)**

## Verfahren und Einrichtung zum Betrieb einer Anschwemm-Filtriereinrichtung mit horizontalen scheibenförmigen drehbaren Filterelementen

Die Erfindung bezieht sich auf ein Verfahren zum Betrieb einer einen Kesselfilter mit im Kessel vertikal angeordnetem, mittels eines Antriebsmotors drehbarem Zentralrohr und mehreren an dem Zentralrohr übereinander angebrachten, koaxial zur Rohrachse angeordneten, als kreisscheibenförmige Hohlkörper ausgebildeten und mit ihren Hohlräumen mit dem Innern des Zentralrohres in Verbindung stehenden sowie an ihren oberen Flachseiten mit Filterflächen versehenen Filterelementen umfassenden Anschwemm-Filtriereinrichtung, bei welchem einer in der Anschwemm-Filtriereinrichtung zu behandelnden, in den Kessel eingeleiteten und dort durch die Filterflächen in die Hohlräume der Filterelemente gelangenden und von da über das Zentralrohr abfließenden Flüssigkeit vor ihrer Einleitung in den Kessel ein sich zusammen mit auszufiltrierenden bzw. der eingeleiteten Flüssigkeit zu entziehenden Bestandteilen derselben auf den Filterflächen in Form einer Anschwemmschicht absetzendes Filterhilfsmittel beigemischt wird; ferner bezieht sich die Erfindung auf eine Einrichtung zur Durchführung dieses Verfahrens.

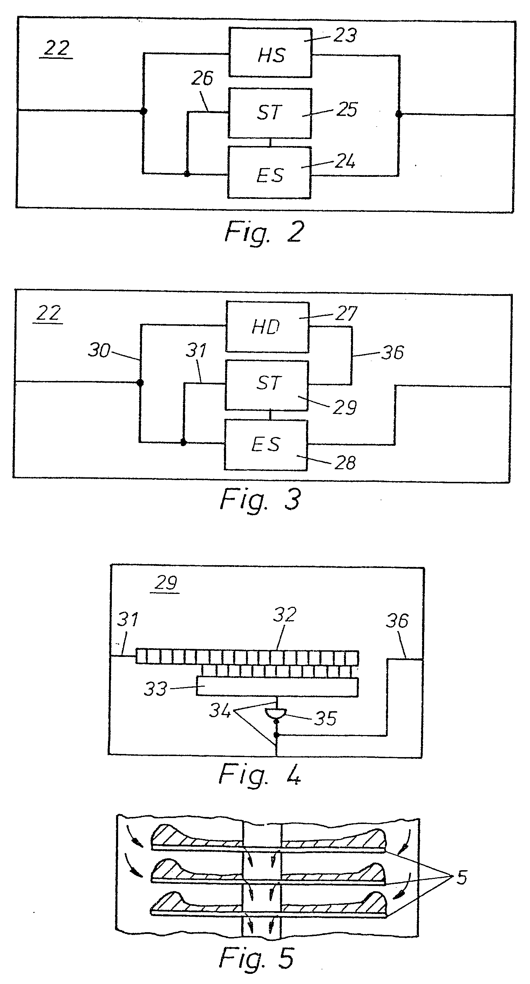

Verfahren dieser Art sind ebenso wie die obengenannten Anschwemm-Filtriereinrichtungen, die auch häufig als Horizontalanschwemmfilter oder einfach als Horizontalfilter bezeichnet werden, seit langem bekannt, z. B. aus den CH-A-382 119 und 434 201, der DE-C-1 222 021, dem DE-U-7 703 620 und den DE-A-1 812 495, 1 812 809, 2 705 046 und 2 752 486. Bei allen diesen Horizontalfiltern besteht ein grundsätzliches Problem darin, daß die Erzielung von Anschwemmschichten auf den Filterrelementen mit im wesentlichen gleicher Schichtdicke von Zentrum bis zur Peripherie der Filterelemente mit Schwierigkeiten verbunden ist, denn im Prinzip sinken ja alle Filterhilfsmittelteilchen wegen der auf sie wirkenden, ihren Auftrieb in der zu filtrierenden Flüssigkeit überwiegenden Schwerkraft vom Moment ihrer Einführung in den Filterkessel bis zum Moment ihrer Ablagerung auf einer Anschwemmschicht ständig innerhalb der das Filterhilfsmittel mit sich führenden, zu filtrierenden Flüssigkeit nach unten ab, und zwar in umso stärkerem Maße, je größer die einzelnen Teilchen sind. Natürlich überlagert sich dieser Absink- oder Sedimentationsbewegung der Filterhilfsmittelteilchen die denselben von der strömenden Flüssigkeit erteilte Bewegung, aber da die Flüssigkeit alle Teilchen im wesentlichen unabhängig von ihrer Teilchengröße gleich bewegt, verursacht die Sedimentationsbewegung im ganzen gesehen ein schnelleres Absinken der größeren im Vergleich zu den kleineren Filterhilfsmittelteilchen und damit eine Entmischung der Filterhilfsmittelteilchen innerhalb der durch den Filterkessel fließenden Flüssigkeit. Diese Entmischung hat zur Folge, daß erstens der Anteil an größeren Filterhilfsmittelteilchen innerhalb der Anschwemmschichten auf den einzelnen übereinander angeordneten Filterelementen im Mittel von oben nach unten zu zunimmt und daß sich zweitens die größeren Filterhilfsmittelteilchen hauptsächlich in den peripheren Bereichen und die kleineren Filterhilfsmittelteilchen in den zentraleren Bereichen der einzelnen Anschwemmschichten ansammeln, letzteres weil die Flüssigkeit von der Peripherie aus in die Zwischenräume zwischen den einzelnen Filterelementen fließt und daher die zentraleren Bereiche später als die peripheren Bereiche erreicht und sich zuerst die schneller absinkenden größeren Filterhilfsmittelteilchen und erst später die langsamer absinkenden kleineren Filterhilsmittelteilchen absetzen. Würde man nun einmal von der Voraussetzung ausgehen, daß sich durch geeignete Wahl der Strömungsverhältnisse und insbesondere der Strömungsgeschwindigkeit der zu filtrierenden Flüssigkeit innerhalb des Filterkessels bei den oberen Filterelementen Anschwemmschichten mit im wesentlichen gleicher Schichtdicke vom Zentrum bis zur Peripherie der Filterelemente erreichen ließen, dann müßten sich wegen des nach unten zu zunehmenden Anteils an größeren Filterhilfsmittelteilchen in den Anschwemmschichten sowie wegen der hauptsächlichen Ansammlung dieser größeren Filterhilfsmittelteilchen in den peripheren Bereichen der Anschwemmschichten bei den unteren Filterelementen Anschwemmschichten mit vom Zentrum nach der Peripherie zu ansteigender Schichtdicke ergeben, wobei dieser Anstieg der Schichtdicke nach der Peripherie zu wegen des nach unten zu zunehmenden Anteils an größeren Filterhilfsmittelteilchen umso stärker ausgeprägt sein müßte, je weiter unten das betrachtete Filterelement im Kessel angeordnet ist. Dieser sich zwangsläufig aus der Sedimentationsbewegung der Filterhilfsmittelteilchen ergebende und daher grundsätzlich unvermeidbare Effekt spielt allerdings solange keine wesentliche Rolle, als der Anstieg der Schichtdicke vom Zentrum bis zur Peripherie bei der Anschwemmschicht des untersten Filterelementes noch relativ gering bleibt, weil der Anstieg der Schichtdicken der Anschwemmschichten bei den darüberliegenden Filterelementen ja geringer als bei dem untersten Filterelement ist und solche geringen Anstiege der Schichtdicken vom Zentrum zur Peripherie der Anschwemmschichten weder auf die Filtrationswirkung derselben noch auf das maximal in den einzelnen Anschwemmschichten absetzbare Schichtvolumen und damit auf insgesamt während eines Filtrationszyklus filtrierbare Flüssigkeitsmenge einen wesentlichen Einfluß haben, zumal die Schichtdicke der Anschwemmschichten oder genauer gesagt die Verteilung derselben über der Gesamtfläche der Anschwemmschicht ja auch noch von anderen Effekten wie z. B. Wirbelbewegungen in der zu filtrierenden Flüssigkeit beeinflußt wird und schon aus diesen Gründen die Filtration um einiges vor dem Zeitpunkt beendet werden muß, zu dem die mittlere Schichtdicke der Anschwemmschichten die dem freien Abstand zwischen benachbarten Filterelemente entsprechende Höhe erreichen würde. Man hat daher diesem Effekt des Schichtdickenanstiegs der unteren Anschwemmschichtegs nach außen zu früher, als die Horizontalfilter noch hauptsächlich mit feiner und mittelfeiner Kieselgur als Filterhilfsmittel und damit also mit Filterhilfsmitteln von im Durchschnitt relativ geringer Teilchengröße betrieben wurden und dementsprechend dieser Schichtdickenanstieg auch nur relativ gering war, nur sehr wenig Beachtung geschenkt. So ist beispielsweise in der Horizontalfilter betreffenden älteren Patentliteratur wie den obengenannten CH-A-382 119 und 434 201, der DE-C-1 222 021 und den DE-A-1 812 495 sowie 1 812 809 kein Hinweis auf diesen Effekt des Schichtdickenanstiegs zu finden. Das änderte sich aber, als man im Rahmen der z. B. aus der Veröffentlichung auf der Titelseite der Zeitschrift »Brauwissenschaft«, Verlag Hans Carl KG, vom Okt. 77 entnehmbaren Verwendung von Horizontalfiltern zur Durchführung des in der DE-A-2 648 978 beschriebenen Stabilisierverfahrens zu Filterhilfsmitteln mit wesentlich größerer mittlerer Teilchengröße als der von feiner und mittelfeiner Kieselgur überging. Denn natürlich ergeben sich bei größerer mittlerer Teilchengröße der Filterhilfsmittelteilchen auch größere Sinkgeschwindigkeiten derselben und damit eine stärkere Entmischung der Filterhilfsmittelteilchen innerhalb der durch den Filterkessel fließenden Flüssigkeit, so daß nunmehr der Effekt des des Schichtdickenanstiegs der Anschwemmschichten vom Zentrum nach der Peripherie zu deutlich in Erscheinung trat und auch nicht nur auf die Anschwemmschichten der unteren Filterelemente beschränkt blieb sondern sich auch auf die weiter oben angeordneten Filterelemente erstreckte, letzteres weil die größeren Sinkgeschwindigkeiten der Filterhilfsmittelteilchen bei unveränderten Strömungsverhältnissen und insbesondere unveränderten Strömungsgeschwindigkeiten der in den Zwischenräumen zwischen den einzelnen Filterelementen von der Peripherie nach dem Zentrum fließenden Flüssigkeit zwangsläufig zu einer schnelleren Ablagerung der Filterhilfsmittelteilchen und damit zu einer Ablagerung in peripheren Bereichen führen müssen und eine Erhöhung der Strömungsgeschwindigkeiten von der Peripherie nach dem Zentrum nur durch Erhöhung der durch die Filterkonstruktion bereits festgelegten maximalen Filterleistung möglich gewesen wäre. Mit dem Übergang zu Filterhilfsmitteln mit wesentlich größerer mittlerer Teilchengröße ergaben sich daher bei praktisch allen Filterelementen Schichtdickenverteilungen der Anschwemmschichten wie sie schematisch in Fig. 5 der Zeichnungen dargestellt sind. Das führte zunächst zu der falschen Schlußfolgerung, daß die dort dargestellten wulstförmigen Verdickungen der Anschwemmschichten in den peripheren Bereichen der Filterelemente auf Wirbelbildungen an den Rändern der Filterelemente zurückzuführen sei. Aufgrund dieser falschen Schlußfolgerung wurde in dem oben schon genannten DE-U-7 703 620 (das eine solche Schichtdickenverteilung mit wulstförmiger Verdickung der Anschwemmschicht im peripheren Bereich des Filterelementes in seiner Fig. 2 zeigt) zur Erzielung gleichmäßiger Schichtdicken vorgeschlagen, die Filterelemente mit einem undurchlässigen Randstreifen von mehr als 10 mm Breite zu versehen, z. B. durch Abdeckung der äußeren Ränder der Filterflächen. Im Prinzip könnte dieser Vorschlag aber nur eine Verlagerung der Verdickungszone um die Randstreifenbreite nach innen bei gleichzeitiger Verbreiterung der Zone und damit verbundener geringfügiger Abflachung der Verdickung mit sich bringen, nicht jedoch die Bildung der Verdickungen an sich verhindern, weil die Ursachen für die Bildung der Verdickungszonen mit diesem Vorschlag ja nicht beseitigt waren. Nach einem anderen, aus der gleichen Quelle stammenden, gleichzeitig gemachten Vorschlag (DE-A-2 705 046) soll eine gleichmäßige Schichtdicke der Anschwemmschichten auf den Filterelementen dadurch erreicht werden, daß die Sedimentationsgeschwindigkeit der zu filtrierenden Flüssigkeit einschließlich des Filterhilfsmittels von einer quer zur Sedimentationsgeschwindigkeit verlaufenden Querströmung überlagert wird, wobei die Querströmung eine durch kontinuierliche Drehung der Filterelemente erzeugte Kreisströmung sein soll. Mit dieser Maßnahme läßt sich aber nur Gleichmäßigkeit der Schichtdicken der Anschwemmschichten in Umfangsrichtung der Filterelemente, nicht jedoch auch eine in radialer Richtung gleichmäße Schichtdicke erreichen, was leicht einzusehen ist, wenn man einmal ein einzelnes Filterhilfsmittelteilchen innerhalb der strömenden Flüssigkeit betrachtet. Die strömende Flüssigkeit hat eine Geschwindigkeitskomponente in zentraler Richtung, der sich durch die Querströmung bzw. Kreisströmung eine Geschwindigkeitskomponente in Umfangsrichtung überlagert. Das Filterhilfsmittelteilchen innerhalb dieser Flüssigkeit hat zusätzlich zu diesen beiden Geschwindigkeitskomponenten der Flüssigkeit, von der es mitgeführt wird, noch eine seiner Sedimentationsgeschwindigkeit entsprechende Geschwindigkeitskomponente in vertikaler Richtung. Die durch die Kreisströmung verursachte Geschwindigkeitskomponente des Teilchens in Umfangsrichtung bewirkt nun lediglich eine sich der normalen Bewegung des Teilchens überlagernde Kreisbewegung desselben um das Zentrum des Filterelementes, so daß sich das Teilchen zwar an einer anderen Stelle als ohne diese Kreisbewegung, jedoch im gleichen radialen Abstand vom Zentrum des Filterelementes wie ohne diese Kreisbewegung ablagert. Da das im Prinzip für alle Filterhilfsmittelteilchen gilt, kann sich durch die Kreisströmung an der Verteilung der abgelagerten Filterhilfsmittelteilchen in radialer Richtung und damit an dem besagten Schichtdickenanstieg der Anschwemmschichten vom Zentrum nach der Peripherie zu nichts ändern. Der mangelnde Erfolg der beiden zuvor erläuterten Vorschläge läßt sich auch einem späteren, aus der gleichen Quelle stammenden Vorschlag zur Erzielung gleichmäßiger Schichtdicken über der gesamten Anschwemmschicht (DE-A-2 752 486) entnehmen, bei dessen Erläuterung u. a. auf frühere erfolglose Bemühungen zur Errreichung dieses Zieles hingewiesen wird. Der spätere Vorschlag läuft im Prinzip darauf hinaus, durch besondere konstruktive Ausbildungen am Einlauf in den Filterkessel eine ruhige, möglichst wirbelfreie Strömung innerhalb des Filterkessels zu erreichen. Daß dieser Vorschlag auch nicht zum Erfolg führen konnte, ergibt sich daraus, daß die Bildung der wulstförmigen Verdickungen der Anschwemmschichten in den peripheren Bereichen von praktisch allen Filterelementen ja, wie oben schon erwähnt, auf die größere Sinkgeschwindigkeit von Filterhilfsmitteln mit relativ großer mittlerer Teilchengröße bei wegen der fest vorgegebenen maximalen Filterleistung praktisch gleichbleibenden Strömungsgeschwindigkeiten bzw. Geschwindigkeitskomponenten der Flüssigkeit in den Zwischenräumen zwischen den einzelnen Filterelementen in zentraler Richtung zurückzuführen ist. Der mangelnde Erfolg dieses späteren Vorschlages trat besonders dadurch deutlich zutage, daß ein nach diesem Vorschlag ausgebildetes Filter im praktischen Betrieb durch Auswirkungen der Bildung von wulstartigen Verdickungen der Anschwemmschichten in den peripheren Bereichen der Filterelemente schwer beschädigt wurde. Die Ursachen derartiger Auswirkungen sind im Prinzip folgende: Sobald die wulstartige Verdickung an der Peripherie einer Anschwemmschicht so weit angewachsen ist, daß die Anschwemmschicht in ihrem peripheren Randbereich auf dem gesamten Umfang bis an die Unterseite des darüberliegenden Filterelementes heranreicht, sinkt der Druck der über den zentraleren Bereichen der Anschwemmschicht befindlichen Flüssigkeit ab, weil die bis an das darüberliegende Filterelement heranreichenden peripheren Randbereiche der Anschwemmschicht nunmehr für die Flüssigkeitsströmung zu den zentraleren Bereichen der Anschwemmschicht einen nicht unbeträchtlichen Strömungswiderstand bilden, der einen ebenfalls nicht unbeträchtlichen Druckabfall verursacht. Wie nun oben schon erwähnt, ist ja der Schichtdikkenanstieg vom Zentrum nach der Peripherie der Anschwemmschichten umso stärker, je weiter unten das betrachtete Filterelement angeordnet ist, und daher wird der Zustand, bei dem die peripheren Randbereiche der Anschwemmschicht gerade auf dem gesamten Umfang bis an das darüberliegende Filterelement heranreichen, in der Regel bei dem unteren von zwei benachbarten Filterelementen etwas eher als bei dem oberen erreicht. Das bedeutet aber, daß auf der Gesamtfläche des oberen Filterelementes noch der volle Filterdruck liegt, während der Flüssigkeitsdruck über dem unteren Filterelement schon wesentlich unter diesen vollen Filterdruck abgesunken ist. Damit ergibt sich eine nach unten gerichtete resultierende Kraft auf das obere Filterelement, die z. B. bei einer Druckdifferenz von 3 bar zwischen den Flüssigkeitsdrücken oberhalb und unterhalb des oberen Filterelementes und einer Filterfläche desselben von 2 m² eine Höhe von 60 Tonnen hat, und so hohen Kräften kann das Filterelement in der Regel nicht unbeschädigt standhalten.

Zusammenfassend läßt sich somit sagen, daß es bisher trotz Kenntnis des Problems und trotz einer Reihe von Versuchen und Vorschlägen zur Lösung desselben noch nicht gelungen war, bei der Verwendung von gröberen Filterhilfsmitteln in Horizontalfiltern Anschwemmschichten auf den Filterelementen mit im wesentlichen gleicher Schichtdicke vom Zentrum bis zur Peripherie der Filterelemente zu erreichen bzw. die sich bildenden wulstförmigen Verdickungen der Anschwemmschichten in den peripheren Bereichen der Filterelemente zu vermeiden.

Der Erfindung lag daher die Aufgabe zugrunde, ein Verfahren der eingangs genannten Art und eine Einrichtung zur Durchführung dieses Verfahrens zu schaffen, mit denen sich die Ausbildung der gesagten wulstförmigen Verdickungen der Anschwemmschichten in den peripheren Bereichen der Filterelemente bei Verwendung gröberer Filterhilfsmittel vermeiden läßt.

Erfindungsgemäß wird das bei einem Verfahren der eingangs genannten Art dadurch erreicht, daß zur Erzielung von Anschwemmschichten auf den Filterelementen mit im wesentlichen gleicher Schichtdicke vom Zentrum bis zur Peripherie der Filterelemente bzw. zur Vermeidung einer Bildung von wulstförmigen Verdickungen der Anschwemmschichten in den peripheren Bereichen der Filterelemente der zur Drehung des Zentralrohres sowie der daran angebrachten Filterelemente vorgesehene Antriebsmotor in vorbestimmten Zeitintervallen kurzzeitig über eine unter 1% des jeweils vorangegangenen Zeitintervalles liegende Zeitdauer eingeschaltet wird und dadurch in dem vorangegangenen Zeitintervall gebildete Verdickungen der Anschwemmschichten in den peripheren Bereichen der Filterelemente abgetragen werden.

Vorteilhaft können sich dabei die kurzzeitigen Einschaltungen des Antriebsmotors jeweils über eine unter 1 Promille, vorzugsweise zwischen 0,1 und 0,5 Promille, des jeweils vorangegangenen Zeitintervalles liegende Zeitdauer erstrecken. Die Dauer der kurzzeitigen Einschaltungen des Antriebsmotors wird zweckmäßig so bemessen, daß der dem Zentralrohr sowie den daran angebrachten Filterelementen durch das kurzzeitige Einschalten des Antriebsmotors vermittelte Drehimpuls ein bis zehn, vorzugsweise drei bis vier, Umdrehungen des Zentralrohres und der Filterelemente bewirkt. Als Zeitintervalle zwischen den aufeinanderfolgenden kurzzeitigen Einschaltungen des Antriebsmotors können vorteilhaft Zeiten zwischen 1 und 100 Minuten, vorzugsweise zwischen 30 und 60 Minuten, gewählt werden. Als Dauer der kurzzeitigen Einschaltungen des Antriebsmotors werden zweckmäßig Zeiten im Bereich zwischen 0,1 und 10 Sekunden, vorzugsweise zwischen 0,5 und 1 Sekunde, gewählt. Für die Durchführung des vorliegenden Verfahrens ist es von Vorteil, wenn der Antriebsmotor in gleichen Zeitintervallen von vorzugsweise 0,5 bis 1 Stunde über jeweils gleiche Einschaltzeiten von vorzugsweise 0,5 bis 1 Sekunde eingeschaltet wird.

Damit sich das durch die kurzzeitigen Einschaltungen des Antriebsmotors und die dadurch verursachte Drehung der Filterelemente von den äußeren Randbereichen der Anschwemmschichten abgeschleuderte Filterhilfsmittel nicht am Kesselboden ansammelt, ist es bei dem vorliegenden Verfahren von wesentlichem Vorteil, von den Anschwemmschichten abgetragenes und auf den Kesselboden abgesunkenes Filterhilfsmittel durch Absaugen von Flüssigkeit vom Kesselboden aus dem Kessel auszutragen und zusammen mit der abgesaugten Flüssigkeit an einer Stelle oberhalb der Filterelemente wieder dem Kessel zuzuführen, vorzugsweise indem die abgesaugte Flüssigkeit der in den Kessel einzuleitenden Flüssigkeit zugeleitet wird. Der zum Absaugen der Flüssigkeit vom Kesselboden erforderliche Unterdruck gegenüber dem Flüssigkeitsdruck im Kessel kann dabei zweckmäßig dadurch erzeugt werden, daß die abgesaugte Flüssigkeit der in den Kessel einzuleitenden Flüssigkeit vor einer die einzuleitende Flüssigkeit antreibenden, in der Flüssigkeitszuführung zum Kessel liegenden Filterpumpe zugeleitet wird. Die pro Zeiteinheit abgesaugte Flüssigkeitsmenge wird zweckmäßig so bemessen bzw. eingestellt, daß sie zwischen 5% und 20%, vorzugsweise ca. 10%, der dem Kessel in der gleichen Zeiteinheit zugeleiteten Flüssigkeitsmenge beträgt.

Die Erfindung betrifft weiter eine Einrichtung zur Durchführung des vorliegenden Verfahrens mit einem Kesselfilter mit im Kessel vertikal angeordnetem, mittels eines elektrischen Antriebsmotors drehbarem Zentralrohr und mehreren an dem Zentralrohr übereinander angebrachten, koaxial zur Rohrachse angeordneten, als kreisscheibenförmige Hohlkörper ausgebildeten und mit ihren Hohlräumen mit dem Innern des Zentralrohres in Verbindung stehenden sowie an ihren oberen Flachseiten mit Filterflächen versehenen Filterelementen, einer Dosiereinrichtung zur Speicherung und Zuführung des Filterhilfsmittels zu der in den Kessel einzuleitenden Flüssigkeit sowie vorzugsweise einer in der Flüssigkeitszuführung zum Kessel liegenden Filterpumpe zum Antrieb der in den Kessel einzuleitenden Flüssigkeit und ferner vorzugsweise einer hydraulischen Kupplung zwischen Antriebsmotor und Zentralrohr; diese Einrichtung ist gekennzeichnet durch eine in der Stromzuführung des Antriebsmotors liegende automatische Schalteinrichtung zur selbsttätigen kurzzeitigen Einschaltung des Antriebsmotors in vorbestimmten Zeitintervallen über eine unter 1%, vorzugsweise unter 1 Promille, des jeweils vorangegangenen Zeitintervalls liegende Zeitdauer.

Vorteilhaft kann dabei die automatische Schalteinrichtung derart ausgebildet sein, daß die Zeitintervalle zwischen den kurzzeitigen Einschaltungen des Antriebsmotors und/oder die Dauer dieser kurzzeitigen Einschaltungen innerhalb vorbestimmter Bereichsgrenzen einstellbar sind.

Bei einer bevorzugten Ausbildungsform dieser Einrichtung umfaßt die automatische Schalteinrichtung einen elektronischen Schalter und ein elektronisches Steuergerät zur Steuerung desselben sowie vorzugsweise Mittel zur Zuführung der Netzfrequenz eines als Stromquelle für den Antriebsmotor dienenden Wechselstromnetzes als Zeitnormal zu dem Steuergerät und das elektronische Steuergerät ist mit einer vorzugsweise als elektronischer Zähler ausgebildeten Frequenzteilerschaltung und einem von derselben gesteuerten logischen Netzwerk zur Erzeugung von ein Durchschalten des elektronischen Schalters über die kurzzeitigen Einschaltzeiten des Antriebsmotors in den vorbestimmten Zeitintervallen bewirkenden Steuersignalen versehen. Als Frequenzteilerschaltung kann dabei vorteilhaft ein eingangsseitig mit der Netzfrequenz beaufschlagter, 18stufiger elektronischer Binärzähler und als logisches Netzwerk eine Oder-Schaltung mit 13 Eingängen, die an die Ausgänge der 13 letzten Stufen des Binärzählers angeschlossen sind, sowie ein Inverter in der Ausgangsleitung der Oder-Schaltung vorgesehen sein. Die Schalteinrichtung kann mit Vorteil zusätzlich einen von Hand betätigbaren Signalgeber zur Ein- und Ausschaltung des elektronischen Schalters von Hand umfassen. Stattdessen kann die automatische Schalteinrichtung aber auch mit Vorteil parallel zu einem von Hand betätigbaren Schalter zur Ein- und Ausschaltung des Antriebsmotors von Hand geschaltet sein.

Eine besonders vorteilhafte Ausbildungsform der vorliegenden Einrichtung umfaßt ferner eine direkt oder über eine Austragungsleitung an den Kesselboden angeschlossene Rückführungsleitung zur Austragung von bei den kurzzeitigen Einschaltungen des Antriebsmotors von den Anschwemmschichten abgetragenem und auf den Kesselboden abgesunkenem Filterhilfsmittel aus dem Kessel durch Absaugen von Flüssigkeit vom Kesselboden sowie zur Zuleitung dieser abgesaugten, Filterhilfsmittel mit sich führenden Flüssigkeit zu der in den Kessel einzuleitenden Flüssigkeit oder oberhalb der Filterelemente unmittelbar zurück in den Kessel und außerdem Pumpmittel zur Erzeugung des zum Absaugen der Flüssigkeit vom Kesselboden erforderlichen Unterdruckes in der Rückführungsleitung gegenüber dem Flüssigkeitsdruck im Kessel. Die Rückführungsleitung kann dabei mit Vorteil in die Zuleitung zu der auch die Pumpmittel zur Erzeugung des Unterdruckes in der Rückführungsleitung bildenden Filterpumpe münden. Ferner kann zur Einstellung der pro Zeiteinheit aus dem Kessel abgesaugten Flüssigkeitsmenge vorteilhaft ein Ventil mit einstellbarem Strömungswiderstand in der Rückführungsleitung vorgesehen sein.

Anhand der nachstehenden Figuren ist die Erfindung im folgenden an Ausführungsbeispielen näher erläutert. Es zeigt

Fig. 1 ein Ausführungsbeispiel einer Einrichtung zur Durchführung des vorliegenden Verfahrens in schematischer Darstellung, wobei der vorbekannte Teil der Einrichtung mit gestrichelten Linien umrahmt ist,

Fig. 2 ein Blockschaltbild eines Ausführungsbeispiels der in der Stromzuführung zu dem für die Drehung der Filterelemente vorgesehenen Antriebsmotor liegenden Schaltaggregates mit einem von dem elektronischen Steuergerät ST gesteuerten elektronischen Schalter ES und einem parallel zu diesem geschalteten, von Hand betätigbaren Schalter HS,

Fig. 3 ein Blockschaltbild eines weiteren Ausführungsbeispiels der in der Stromzuführung zu dem für die Drehung der Filterelemente vorgesehenen Antriebsmotor liegenden Schaltaggregates mit einem von dem elektronischen Steuergerät ST gesteuerten elektronischen Schalter ES und einem von Hand betätigbaren Signalgeber HD zur Ein- und Ausschaltung des elektronischen Schalters von Hand,

Fig. 4 ein Blockschaltbild eines Ausführungsbeispiels des elektronischen Steuergerätes ST in den Figuren 2 und 3,

Fig. 5 die sich während des Betriebes auf den Filterelementen der Anschwemm-Filtriereinrichtung bildenden Anschwemmschichten im Längsschnitt in schematischer Darstellung mit einer typischen Form des Schichtdickenanstiegs vom Zentrum zur Peripherie der Filterelemente.

Das vorliegende Verfahren geht davon aus, daß nach allen bisherigen Erfahrungen und auch nach den Ergebnissen theoretischer Überlegungen bei Verwendung von relativ grobkörnigen Filterhilfsmitteln in Horizontalfiltern die Bildung von Anschwemmschichten auf den Filterelementen mit vom Zentrum nach der Peripherie der Filterelemente zu ansteigender Schichtdicke im Prinzip — jedenfalls mit einem vertretbaren technischen Aufwand — unvermeidbar ist. Aus diesem Grunde werden bei dem vorliegenden Verfahren die äußeren Randbereiche der Anschwemmschichten, in denen sich — wie in Fig. 5 ersichtlich — die stärksten Schichtdickenstiege ergeben, von Zeit zu Zeit durch kurzfristige Drehung der Filterelemente sozusagen abgeschleudert. Genauer gesagt handelt es sich bei diesem »Abschleudern« um ein Wegwischen der seit der vorangegangenen kurzzeitigen Drehung der Filterelemente in den äußeren Randzonen der Anschwemmschichten gebildeten leichten Erhöhungen der Anschwemmschichten in tangentialer Richtung. Dieses Wegwischen wird dadurch verursacht, daß die Filterelemente und mit diesen die Anschwemmschichten nach dem Einschalten des zur Drehung der Filterelemente vorgesehenen Antriebsmotors in Drehrichtung beschleunigt werden, während die Flüssigkeit im Filterkessel aufgrund ihrer Trägheit bei Beginn der Beschleunigung der Filterelemente zunächst noch fast stehenbleibt und dann erst nach und nach mit in Drehung versetzt wird, wobei aber die Drehgeschwindigkeit der Flüssigkeit erst während des Auslaufens der kurzzeitigen Drehung der Filterelemente deren Drehgeschwindigkeit erreicht; die dadurch entstehende Relativbewegung zwischen Anschwemmschicht und Flüssigkeit wischt den oberen Teil der Anschwemmschicht weg, und zwar hauptsächlich in den äußeren Randzonen, weil dort die Relativbewegung am größten ist. Die weggewischten Filterhilfsmittelteilchen werden dann durch Wirbel, die dadurch entstehen, daß auch der die Filterelemente umgebende Flüssigkeitsmantel bei Beginn der Beschleunigung der Filterelemente praktisch stehenbleibt, zum großen Teil in diesen Flüssigkeitsmantel befördert und beginnen dort auf den Kesselboden zu abzusinken.

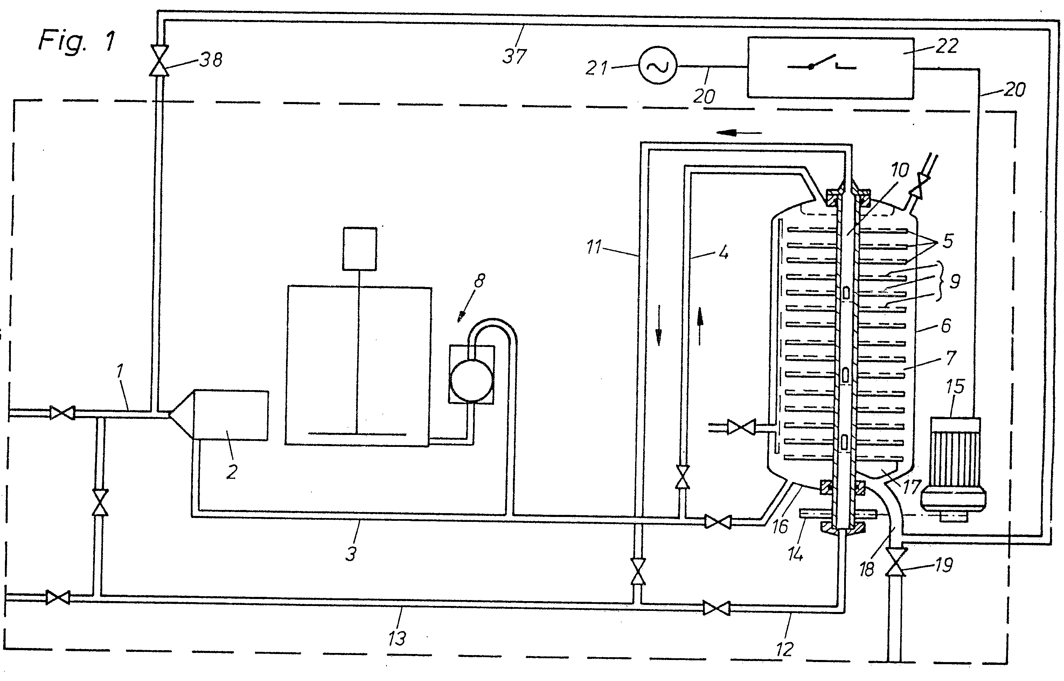

Bei der in Fig. 1 gezeigten Einrichtung zur Durchführung des vorliegenden Verfahrens wird in bekannter Weise eine Flüssigkeit über die Zuleitung 1 und die Filterpumpe 2 sowie die Leitungen 3 und 4 oberhalb der Filterelemente 5 in den Kessel 6 des Horizontalfilters 7 eingeleitet, nachdem ihr zuvor mittels der Dosiereinrichtung 8 ein relativ grobkörniges Filterhilfsmittel zudosiert worden ist. Die Flüssigkeit kann beispielsweise ein mit Trubstoffen versetztes Unfiltrat, das mit grober Kieselgur als Filterhilfsmittel filtriert werden soll, oder ein vorgeklärtes Filtrat, dem durch Zudosierung von Polyvinylpolypyrrolidon als Filterhilfsmittel Gerbstoffe entzogen werden, die von den Polyvinylpolypyrrolidonkörnern adsorbiert werden und sich zusammen mit diesen auf den Filterflächen 9 der Filterelemente 5 absetzen, oder auch eine alkalische Waschflüssigkeit wie Natronlauge zur Regenerierung der auf den Filterflächen 9 abgesetzten Polyvinylpolypyrrolidonkörner durch Auflösung und Wegspülung der adsorbierten Gerbstoffe beim Passieren der auf den Filterelementen 5 gebildeten Anschwemmschichten sein, wobei im letzteren Fall natürlich die Zudosierung von Filterhilfsmitteln wegfällt. Die in den Kessel 6 über die Leitung 4 eingeleitete Flüssigkeit fließt durch die auf den Filterelementen 5 gebildeten Anschwemmschichten in die hohlen Innenräume der Filterelemente 5 und von da über das Zentralrohr 10 und die Leitung 11 bzw. bei der Restfiltration die Leitung 12 in die Abführungsleitung 13, wobei sich in der eingeleiteten Flüssigkeit enthaltene Filterhilfsmittelteilchen und Trubstoffe auf den Anschwemmschichten absetzen. Während der Durchleitung der Flüssigkeit durch den Horizontalfilter 7 stehen die Filterelemente — abgesehen von ihren durch die erwähnten kurzzeitigen Einschaltungen des Antriebsmotors verursachten kurzzeitigen Drehungen beim vorliegenden Verfahren — still. Nach der Durchleitung der Flüssigkeit sowie gegebenenfalls einer Nachspülung mit Wasser nach dem Durchleiten von Regenerierflüssigkeit und der sich meist zur vollständigen Abführung der Flüssigkeit aus dem Kessel 6 anschließenden Restfiltration wird der mit dem drehbaren Zentralrohr 10 über eine hydraulische Kupplung 14 verbundene elektrische Antriebsmotor 15 eingeschaltet, wodurch das Zentralrohr 10 und die daran angebrachten Filterelemente 5 in Drehung versetzt und infolge der dadurch erzeugten Zentrifugalkräfte die Anschwemmschichten von den Filterelementen nach außen abgeschleudert werden und dann nach unten auf den Kesselboden 16 fallen. Von dort werden sie mit Hilfe der sich mit dem Zentralrohr 10 mitdrehenden Schaufel 17 zur Mündung der Austragungsleitung 18 im Kesselboden 16 befördert und über dieselbe durch das Abflußventil 19 entweder bei normalen Filtrierverfahren einem Trubsammenbehälter oder nach einer Regenerierung wieder der Dosiereinrichtung 8 zugeführt. Betreffs Einzelheiten dieser bekannten Betriebsverfahren von Horizontalfiltern wird auf den einschlägigen Stand der Technik und insbesondere auf die eingangs angeführten diesbezüglichen Literaturstellen verwiesen.

Bei dem vorliegenden Verfahren wird nun während der Durchleitung der Flüssigkeit durch den Horizontalfilter 7 in bestimmten Zeitintervallen von z. B. einer halben bis einer Stunde der elektrische Antriebsmotor 15 kurzzeitig jeweils über eine Zeitdauer von beispielsweise einer halben bis einer Sekunde eingeschaltet. Diese Einschaltzeiten können z. B. so bemessen sein, daß der währenddessen von dem Antriebsmotor 15 über die hydraulische Kupplung 14 auf das Zentralrohr 10 abgegebene Drehimpuls drei bis vier Umdrehungen des Zentralrohres 10 sowie der daran angebrachten Filterelemente 5 bewirkt. Die hydraulische Kupplung 14 zwischen Antriebsmotor 15 und Zentralrohr 10 verhindert dabei eine schlagartige Beschleunigung des Zentralrohres und der angebrachten Filterelemente, die unter Umständen zu Beschädigungen der Anschwemmschichten führen könnte. Solche schlagartigen Beschleunigungen lassen sich aber auch ohne eine hydraulische Kupplung verhindern, z. B. durch Verwendung eines Gleichstrom-Hauptschlußmotors als Antriebsmotor. Mit der durch den genannten Drehimpuls bewirkten kurzzeitigen Drehung der Filterelemente 5 werden, wie oben schon näher erläutert, die seit der vorangegangenen kurzzeitigen Drehung der Filterelemente in den äußeren Randzonen der Anschwemmschichten gebildeten leichten Erhöhungen derselben abgetragen bzw. »weggewischt«.

Die kurzzeitigen Einschaltungen des Antriebsmotors 15 werden in der Regel automatisch vorgenommen. Dazu dient das in die Stromzuführung 20 vom Wechselstromnetz 21 zum Antriebsmotor 15 eingeschaltete Schaltaggregat 22, das in zwei Ausführungsbeispielen in den Figuren 2 und 3 dargestellt ist. Das in Fig. 2 gezeigte Schaltaggregat 22 umfaßt einen von Hand betätigbaren Schalter 23 zur Langzeiteinschaltung des Antriebsmotors für die obenerwähnte vollständige Abschleuderung der Anschwemmschichten und eine aus dem parallel zum Handschalter 23 geschalteten elektronischen Schalter 24 und dem elektronischen Steuergerät 25 für den elektronischen Schalter 24 sowie einer Leitung 26 zur Zuführung der Netzfrequenz zum Steuergerät 25 bestehende automatische Schalteinrichtung für die genannten kurzzeitigen Einschaltungen des Antriebsmotors 15. Anstelle des Handschalters 23 kann aber auch, wie in Fig. 3 gezeigt, ein z. B. als Dauerimpulsgeber ausgebildeter, von Hand betätigbarer Signalgeber 27 vorgesehen sein, mit dem ein elektronischer Schalter 28 entweder direkt oder wie in Fig. 3 über das elektronische Steuergerät 29 auch über längere Zeiten eingeschaltet werden kann. In diesem Fall dient der elektronische Schalter sowohl für die von dem Steuergerät 29 gesteuerten automatischen kurzzeitigen Einschaltungen des Antriebsmotors 15 als auch für die Langzeiteinschaltungen desselben bei der vollständigen Abschleuderung der Anschwemmschichten mittels des von Hand betätigbaren Signalgebers 27. Der Aufbau von Handschaltern und elektronischen Schaltern ist bekannt und braucht daher nicht näher erläutert werden, und der Signalgeber 27 kann z. B. aus einer über die Leitung 30 an das Wechselstromnetz 21 angeschlossenen Gleichrichterschaltung und einem Handschalter zum Ein- und Ausschalten eines von dem Signalgeber abzugebenden Gleichspannungs-Dauerimpulses bestehen. Ein besonders einfaches Ausführungsbeispiel für den Aufbau des elektronischen Steuergerätes 29 zeigt die Fig. 4. Dort wird einem als Frequenzteiler arbeitenden 18stufigen Binärzähler 32 eingangsseitig über die Leitung 31 die Netzfrequenz von 50 Hz bzw. ein Schaltimpuls alle 20 Millisekunden zugeführt. Geht man von der Schaltstellung 0 in allen Binärstufen des Zählers 32 aus, dann dauert es 640 Millisekunden, bis die sechste Stufe des Zählers 32 auf die Schaltstellung 1 umgeschaltet wird, und von da an vergehen noch 2620,8 Sekunden bzw. 43,68 Minuten, bis der Zähler 32 wieder in allen Stufen die Schaltstellung 0 erreicht. Während dieser 43,68 Minuten steht mindestens eine, in der Regel aber mehrere der 13 letzten Stufen des Zählers 32 in der Schaltstellung 1, so daß die mit ihren 13 Eingängen an die Ausgänge dieser 13 letzten Stufen des Zählers 32 angeschlossene Oder-Schaltung 333 während dieser 43,68 Minuten an ihrem Ausgang eine 1 abgibt, die von dem in der Ausgangsleitung 34 liegenden Inverter 35 zu einer 0 invertiert wird. Während der ersten 0,64 Sekunden hingegen stehen alle 13 letzten Stufen des Zählers 32 in der Schaltstellung 0, so daß während dieser Zeit am Ausgang der Oder-Schaltung 33 eine 0 und somit am Ausgang des Inverters 35 eine 1 steht. Das Steuergerät 29 gibt also an seinem Ausgang in Abständen von 43,69 Minuten jeweils über 0,64 Sekunden eine 1 und während der übrigen Zeit eine 0 ab und schaltet daher den mit seinem Steuereingang an den Ausgang des Steuergerätes 29 angeschlossenen elektronischen Schalter 28 und damit den Antriebsmotor 15 etwa aller 3/4 Stunden für etwa 2/3 Sekunden ein. Ferner kann der elektronische Schalter 28 und damit der Antriebsmotor 15 noch durch den von Hand betätigbaren und bei Einschaltung auf die Leitung 36 eine 1 abgebenden Signalgeber 27 über längere längere Zeiten von Hand eingeschaltet werden. Das elektronische Steuergerät 25 in dem in Fig. 2 gezeigten Schaltaggregat 22 kann im übrigen mit Ausnahme der dort nicht erforderlichen Leitung 36 genauso wie das in Fig. 4 gezeigte Steuergerät 29 aufgebaut sein und hat in diesem Fall auch die gleiche Wirkung, nämlich eine automatische Einschaltung des Antriebsmotors 15 etwa alle 3/4 Stunden für jeweils etwa 2/3 Sekunden. Schließlich ist es auch möglich, bei dem in Fig. 2 gezeigten Schaltaggregat 22 anstelle des elektronischen Schalters 24 sowie des elektronischen Steuergerätes 25 eine parallel zu dem Handschalter 23 geschaltete elektrische Schaltuhr vorzusehen, die den Antriebsmotor 15 automatisch in bestimmten Zeitintervallen jeweils kurzzeitig einschaltet.

Die bei den kurzzeitigen Drehungen der Filterelemente 5 von den Anschwemmschichten abgetragenen bzw. »weggewischten« Filterhilfsmittelteilchen sinken, wie oben schon erwähnt, zum Teil auf den Kesselboden 16 ab und würden dort ohne Gegenmaßnahmen mit der Zeit eine relativ dicke Schicht bilden, die bei den kurzzeitigen Drehungen der Filterelemente 5 von der sich mitdrehenden Schaufel 17 umgewälzt werden müßte und daher diese Drehungen mehr und mehr behindern würde. Außerdem hätte eine solche Schichtbildung in dem obenerwähnten Fall einer Behandlung von vorgeklärtem Filtrat mit Polyvinylpolypyrrolidonkörnern als Filterhilfsmitteln zum Entzug von Gerbstoffen den Nachteil, daß die in dieser Schicht befindlichen Körner bei der anschließenden Regenerierung nicht von der Waschflüssigkeit durchströmt und daher auch nicht oder nur sehr unvollständig regeneriert werden würden. Daher ist zur Vermeidung der Bildung einer solchen Filterhilfsmittelschicht am Kesselboden 16 des Filters 7 die Rückführungsleitung 37 vorgesehen, die die vom Kesselboden 16 ausgehende Austragungsleitung 18 oberhalb des Abflußventils 19 über das Regulierventil 38 mit der Zuleitung 1 zur Filterpumpe 2 verbindet. Über diese Rückführungsleitung 37 wird aus dem Kessel 6 laufend Flüssigkeit abgesaugt, weil der annähernd dem Ausgangsdruck der Filterpumpe 2 entsprechende Flüssigkeitsdruck im Kessel 6 wesentlich höher als der Druck am Eingang der Filterpumpe 2 und damit am Ende der Rückführungsleitung 37 ist, und mit dieser abgesaugten Flüssigkeit werden auch die auf den Kesselboden 16 abgesunkenen Filterhilfsmittelteilchen abgesaugt, so daß die oben erwähnte Schichtbildung nicht eintreten kann. Die über die Rückführungsleitung 37 pro Zeiteinheit abgesaugte Flüssigkeitsmenge kann mittels des Regulierventils 38 eingestellt werden und sollte etwa 10% der dem Kessel 6 in der gleichen Zeiteinheit zugeführten Flüssigkeitsmenge betragen. Die mit der abgesaugten Flüssigkeit mitgeführten Filterhilfsmittelteilchen gelangen dann über die Rückführungsleitung 37, die Filterpumpe 2 und die Leitungen 3 und 4 oberhalb der Filterelemente 5 wieder in den Kessel 6 und werden dann wenigstens zum größten Teil auf den Filterelementen 5 angeschwemmt, so daß sie in dem obenerwähnten Fall einer Behandlung von vorgeklärtem Filtrat mit Polyvinylpolypyrrolidonkörnern als Filterhilfsmittel bei der anschließenden Regenerierung gut von der Waschflüssigkeit durchströmt und daher auch vollständig regeneriert werden. Im übrigen werden natürlich nicht nur die genannten »weggewischten« und zum Kesselboden 6 abgesunkenen Filterhilfsmittelteilchen sondern auch alle anderen zum Kesselboden absinkenden Filterhilfsmittelteilchen mit der vom Kesselboden abgesaugten Flüssigkeit mit abgesaugt und wieder der in den Kessel einzuleitenden Flüssigkeit zugeführt, so daß in dem vorgenannten Fall immer eine vollständige Regenerierung erreicht werden kann.

Bei einer Reihe von Versuchen mit dem vorliegenden Verfahren hat sich gezeigt, daß sich mit Hilfe des vorliegenden Verfahrens Anschwemmschichten von nahezu gleicher Schichtdicke über der gesamten Filterfläche erzielen lassen. Da keine Wulstbildung in den äußeren Randbereichen der Anschwemmschichten mehr auftritt, ist auch die oben erwähnte Gefahr von Beschädigungen der Filterelemente beseitigt. Schließlich kann aufgrund der gleichmäßigen Anschwemmschichten der Trubraum optimal ausgenutzt werden.

## Patentansprüche

1. Verfahren zum Betrieb einer einen Kesselfilter mit im Kessel vertikal angeordnetem, mittels eines Antriebsmotors drehbarem Zentralrohr und mehreren an dem Zentralrohr übereinander angebrachten, koaxial zur Rohrachse angeordneten, als kreisscheibenförmige Hohlkörper ausgebildeten und mit ihren Hohlräumen mit dem Innern des Zentralrohres in Verbindung stehenden sowie an ihren oberen Flachseiten mit Filterflächen versehenen Filterelementen umfassenden Anschwemm-Filtriereinrichtung, bei welchem einer in der Anschwemm-Filtriereinrichtung zu behandelnden, in den Kessel eingeleiteten und dort durch die Filterflächen in die Hohlräume der Filterelemente gelangenden und von da über das Zentralrohr abfließenden Flüssigkeit vor ihrer Einleitung in den Kessel ein sich zusammen mit auszufiltrierenden bzw. der eingeleiteten Flüssigkeit zu entziehenden Bestandteilen derselben auf den Filterflächen in Form einer Anschwemmschicht absetzendes Filterhilfsmittel beigemischt wird, dadurch gekennzeichnet, daß zur Erzielung von Anschwemmschichten auf den Filterelementen mit im wesentlichen gleicher Schichtdicke vom Zentrum bis zur Peripherie der Filterelemente bzw. zur Vermeidung einer Bildung von wulstförmigen Verdickungen der Anschwemmschichten in den peripheren Bereichen der Filterelemente der zur Drehung des Zentralrohres sowie der daran angebrachten Filterelemente vorgesehene Antriebsmotor in vorbestimmten Zeitintervallen kurzzeitig über eine unter 1% des jeweils vorangegangenen Zeitintervalles liegende Zeitdauer eingeschaltet wird und dadurch in dem vorangegangenen Zeitintervall gebildete Verdickungen der Anschwemmschichten in den peripheren Bereichen der Filterelemente abgetragen werden.

2. Verfahren nach Anspruch 1, dadurch gekennzeichnet, daß die kurzzeitigen Einschaltungen des Antriebsmotors sich jeweils über eine unter 1 Promille, vorzugsweise zwischen 0,1 und 0,5 Promille, des jeweils vorangegangenen Zeitintervalles liegende Zeitdauer erstrecken.

3. Verfahren nach Anspruch 1 oder 2, dadurch gekennzeichnet, daß die Dauer der kurzzeitigen Einschaltungen des Antriebsmotors so bemessen wird, daß der dem Zentralrohr sowie den daran angebrachten Filterelementen durch das kurzzeitige Einschalten des Antriebsmotors vermittelte Drehimpuls ein bis zehn, vorzugsweise drei bis vier, Umdrehungen des Zentralrohres und der Filterelemente bewirkt.

4. Verfahren nach einem der Ansprüche 1 bis 3, dadurch gekennzeichnet, daß als Zeitintervalle zwischen den aufeinanderfolgenden kurzzeitigen Einschaltungen des Antriebsmotors Zeiten im Bereich zwischen 1 und 100 Minuten, vorzugsweise zwischen 30 und 60 Minuten, gewählt werden.

5. Verfahren nach einem der Ansprüche 1 bis 4, dadurch gekennzeichnet, daß als Dauer der kurzzeitigen Einschaltungen des Antriebsmotors Zeiten im Bereich zwischen 0,1 und 10 Sekunden, vorzugsweise zwischen 0,5 und 1 Sekunde, gewählt werden.

6. Verfahren nach einem der Ansprüche 1 bis 5, dadurch gekennzeichnet, daß der Antriebsmotor in gleich großen Zeitintervallen von vorzugsweise 0,5 bis 1 Stunde über jeweils gleich große Einschaltzeiten von vorzugsweise 0,5 bis 1 Sekunde eingeschaltet wird.

7. Verfahren nach einem der Ansprüche 1 bis 6, dadurch gekennzeichnet, daß von den Anschwemmschichten abgetragenes und auf den Kesselboden abgesunkenes Filterhilfsmittel durch Absaugen von Flüssigkeit vom Kesselboden aus dem Kessel ausgetragen und zusammen mit der abgesaugten Flüssigkeit an einer Stelle oberhalb der Filterelemente wieder dem Kessel zugeführt wird, vorzugsweise indem die abgesaugte Flüssigkeit der in den Kessel einzuleitenden Flüssigkeit zugeleitet wird.

8. Verfahren nach Anspruch 7, dadurch gekennzeichnet, daß der zum Absaugen der Flüssigkeit vom Kesselboden erforderliche Unterdruck gegenüber dem Flüssigkeitsdruck im Kessel dadurch erzeugt wird, daß die abgesaugte Flüssigkeit der in den Kessel einzuleitenden Flüssigkeit vor einer die einzuleitende Flüssigkeit antreibenden, in der Flüssigkeitszuführung zum Kessel liegenden Filterpumpe zugeleitet wird.

9. Verfahren nach Anspruch 7 oder 8, dadurch gekennzeichnet, daß die pro Zeiteinheit abgesaugte Flüssigkeitsmenge so bemessen bzw. eingestellt wird, daß sie zwischen 5% und 20%, vorzugsweise ca. 10%, der dem Kessel in der gleichen Zeiteinheit zugeleiteten Flüssigkeitsmenge beträgt.

10. Einrichtung zur Durchführung des Verfahrens nach einem der Ansprüche 1 bis 9 mit einem Kesselfilter mit im Kessel (6) vertikal angeordnetem, mittels eines elektrischen Antriebsmotors drehbarem Zentralrohr (10) und mehreren an dem Zentralrohr (10) übereinander angebrachten, koaxial zur Rohrachse angeordneten, als kreisscheibenförmige Hohlkörper ausgebildeten und mit ihren Hohlräumen mit dem Innern des Zentralrohres in Verbindung stehenden sowie an ihren oberen Flachseiten mit Filterflächen versehenen Filterelementen, einer Dosiereinrichtung (8) zur Speicherung und Zuführung des Filterhilfsmittels zu der in den Kessel einzuleitenden Flüssigkeit sowie vorzugsweise einer in der Flüssigkeitszuführung zum Kessel liegenden Filterpumpe (2) zum Antrieb der in den Kessel einzuleitenden Flüssigkeit und ferner vorzugsweise einer hydraulischen Kupplung (14) zwischen Antriebsmotor und Zentralrohr, gekennzeichnet durch eine in der Stromzuführung (20) des Antriebsmotors (15) liegende automatische Schalteinrichtung (24, 25; 27, 28, 29) zur selbsttätigen kurzzeitigen Einschaltung des Antriebsmotors in vorbestimmten Zeitintervallen über eine unter 1%, vorzugsweise unter 1 Promille, des jeweils vorangegangenen Zeitintervalles liegende Zeitdauer.

11. Einrichtung nach Anspruch 10, gekennzeichnet durch eine derartige Ausbildung der automatischen Schalteinrichtung (24, 25; 27, 28, 29), daß die Zeitintervalle zwischen den kurzzeitigen Einschaltungen des Antriebsmotors (15) und/oder die Dauer dieser kurzzeitigen Einschaltungen innerhalb vorbestimmter Bereichsgrenzen einstellbar sind.

12. Einrichtung nach Anspruch 10 oder 11, dadurch gekennzeichnet, daß die automatische Schalteinrichtung (24, 25; 27, 28, 29) einen elektronischen Schalter (24; 28) und ein elektronisches Steuergerät (25; 29) zur Steuerung desselben sowie vorzugsweise Mittel (26, 31) zur Zuführung der Netzfrequenz eines als Stromquelle für den Antriebsmotor (15) dienenden Wechselstromnetzes (21) als Zeitnormal zu dem Steuergerät umfaßt und daß das elektronische Steuergerät (24, 28) mit einer vorzugsweise als elektronischer Zähler ausgebildeten Frequenzteilerschaltung (32) und einem von derselben gesteuerten logischen Netzwerk (33, 35) zur Erzeugung von ein Druckschalten des elektronischen Schalters über die kurzzeitigen Einschaltzeiten des Antriebsmotors in den vorbestimmten Zeitintervallen bewirkenden Steuersignalen versehen ist.

13. Einrichtung nach Anspruch 12, dadurch gekennzeichnet, daß als Frequenzteilerschaltung ein eingangsseitig mit der Netzfrequenz beaufschlagter, 18stufiger elektronischer Binärzähler (32) und als logisches Netzwerk eine Oder-Schaltung (33) mit 13 Eingängen, die an die Ausgänge der 13 letzten Stufen des Binärzählers (32) angeschlossen sind, sowie ein Inverter (35) in der Ausgangsleitung (34) der Oder-Schaltung (33) vorgesehen sind.

14. Einrichtung nach Anspruch 12 oder 13, dadurch gekennzeichnet, daß die Schalteinrichtung (27, 28, 29) zusätzlich einen von Hand betätigbaren Signalgeber (27) zur Ein- und Ausschaltung des elektronischen Schalters (28) von Hand umfaßt.

15. Einrichtung nach einem der Ansprüche 10 bis 13, dadurch gekennzeichnet, daß die automatische Schalteinrichtung (24, 25) parallel zu einem von Hand betätigbaren Schalter (23) zur Ein- und Ausschaltung des Antriebsmotors (15) von Hand geschaltet ist.

16. Einrichtung nach einem der Ansprüche 10 bis 15, gekennzeichnet durch eine direkt oder über eine Austragungsleitung (18) an den Kesselboden (16) angeschlossene Rückführungsleitung (37) zur Austragung von bei den kurzzeitigen Einschaltungen des Antriebsmotors (15) von den Anschwemmschichten abgetragenem und auf den Kesselboden abgesunkenem Filterhilfsmittel aus dem Kessel durch Absaugen von Flüssigkeit vom Kesselboden sowie zur Zuleitung dieser abgesaugten, Filterhilfsmittel mit sich führenden Flüssigkeit zu der in den Kessel (6) einzuleitenden Flüssigkeit oder oberhalb der Filterelemente (5) unmittelbar zurück in den Kessel (6) und ferner durch Pumpmittel (2) zur Erzeugung des zum Absaugen der Flüssigkeit vom Kesselboden erforderlichen Unterdruckes in der Rückführungsleitung (37) gegenüber dem Flüssigkeitsdruck im Kessel (6).

17. Einrichtung nach Anspruch 16, dadurch gekennzeichnet, daß die Rückführungsleitung (37) in die Zuleitung (1) zu der auch die Pumpmittel zur Erzeugung des Unterdruckes in der Rückführungsleitung bildenden Filterpumpe (2) mündet.

18. Einrichtung nach Anspruch 16 oder 17, gekennzeichnet durch ein Ventil (38) mit einstellbarem Strömungswiderstand in der Rückführungsleitung (37) zur Einstellung der pro Zeiteinheit aus dem Kessel (6) abgesaugten Flüssigkeitsmenge.

**Claims**

1. A method of operation of a settling-filter-installation comprising a tank filter with a central pipe arranged vertically in the tank and being rotable by a drive motor and with a plural number of filter elements mounted one upon the other to the central pipe and being shaped as circular disc-like hollow bodies arranged coaxially to the axis of the central pipe and connected, with their hollow spaces, with the interior of the central pipe and provided on their upper flat sides with filter surfaces, in which method a fluid to be treated in the settling-filter-installation is led into the tank and reaches there through the filter surfaces the hollow spaces of the filter elements and flows off from there over the central pipe and a filter aid is admixed to the fluid before leading the fluid into the tank and settles, together with the constituent parts of the fluid to be filtered out of or extracted from the fluid, on the filter surfaces in form of a settling layer, characterized in that, for achieving settling layers on the filter elements with essentially constant layer thickness from the center to the periphery of the filter elements or for avoiding a forming of bulging thickenings of the settling layers in the peripheral ranges of the filter elements, the drive motor for rotating the central pipe and the filter elements mounted thereon is switched on in predetermined time intervals for a short time over a length of time being smaller than 1% of the respectively preceding time interval and thereby thickenings of the settling layers in the peripheral ranges of the filter elements formed in the respectively preceeding time interval are removed.

2. A method according to claim 1, characterized in that the short-time switchings on of the drive motor extend over a length of time being smaller than 1 permille, preferably between 0,1 and 0,5 permille, of the respectively preceding time interval.

3. A method according to claim 1 or 2, characterized in that the length of time of the short-time switchings on of the drive motor are so adjusted that the rotating impulse conveyed to the central pipe and the filter elements mounted thereon by the short-time switching on of the drive motor effects one to ten, preferably three to four, revolutions of the central pipe and the filter elements.

4. A method according to one of the claims 1 to 3, characterized in that as time intervals between short-time switchings on of the drive motor following one another lengths of time in the range of 1 to 100 minutes, preferably between 30 and 60 minutes, are choosen.

5. A method according to one of the claims 1 to 4, characterized in that as length of time of the short-time switchings on of the drive motor times in the range of 0,1 to 10 seconds, preferably between 0,5 and 1 second, are choosen.

6. A method according to one of the claims 1 to 5, characterized in that the drive motor is switched on in time intervals of equal length, preferably of 0,5 to 1 hour, each time over switching on times of equal length, preferably of 0,5 to 1 second.

7. A method according to one of the claims 1 to 6, characterized in that filter aid removed from the settling layers and sunk down to the bottom of the tank is carried out of the tank by sucking of fluid from the bottom of the tank and fed together with the fluid sucked off again back to the tank on a point above the filter elements, preferably by feeding the fluid sucked off to the fluid to be led into the tank.

8. A method according to claim 7, characterized in that the lower pressure in relation to the fluid pressure in the tank, which lower pressure is necessary for sucking off the fluid form the bottom of the tank, is caused thereby that the fluid sucked off is fed to the fluid to be led into the tank before a filter pump driving on the fluid to be led into the tank and being arranged in the fluid feeding line leading to the tank.

9. A method according to claim 7 or 8, characterized in that the quantity of fluid sucked off per time unit is so choosen or adjusted that this quantity lies between 5% and 20%, preferably at about 10%, of the quantity of fluid being led into the tank within the same time unit.

10. Installation for performing the method according to one of the claims 1 to 9 comprising a tank filter with a central pipe arranged vertically in the tank and being rotable by a drive motor and with a plural number of filter elements mounted one upon the other to the central pipe and being shaped as circular disc-like hollow bodies aranged coaxially to the axis of the central pipe and connected, with their hollow spaces, with the interior of the central pipe and provided on their upper flat sides with filter surfaces, a dosing device for storing and feeding the filter aid to the fluid to be led into the tank, and preferably a filter pump for driving on the fluid to be led into the tank, and further preferably a hydraulic clutch between the drive motor and the central pipe, characterized by an automatic switching device (24, 25; 27, 28, 29) lying in the power supply line (20) of the drive motor (15) for automatically short-time switching on the drive motor in predetermined time intervals over a length of time being smaller than 1%, preferably smaller than 1 permille, of the respectively preceding time interval.

11. Installation according to claim 10, characterized by such a development of the automatical switching device (24, 25; 27, 28, 29) that the time intervals between the short-time switchings on of the drive motor (15) and/or the length of time of these short-time switchings on are adjustable within predetermined limits of the respective adjusting range.

12. Installation according to claims 10 and 11, characterized in that the automatic switching device (24, 25; 27, 28, 29) comprises an electronic switch (24; 28) and an electronic control device (25; 29) for controlling said electronic switch and preferably means (26, 31) for supplying the line current frequency of an alternating current line (21) serving as power source for the drive motor (15) as normal measure of time to the control device and that the electronic control device (24; 28) is provided with a frequency divider circuit (32) preferably formed of an electronic counter and with a logic network (33, 35) controlled by the frequency divider circuit for producing control signals effecting a switching on of the electronic switch over the short-time switching on time of the drive motor in the predetermined time intervals.

13. Installation according to claim 12, characterized in that a 18stage electronic binary counter (32) supplied at its input side with the line current frequency is provided as frequency divider circuit and a an OR-circuit (33) with 13 inputs connected to the outputs of the last 13 stages of the binary counter (32) and with an inverter (35) in its output line (34) is provided as logic network.

14. Installation according to claim 12 or 13, characterized in that the switching device (27, 28, 29) comprises additionally a manually manipulatable signal giving means (27) for manually switching on and off the electronic switch (28).

15. Installation according to one of the claims 10 to 13, characterized in that the automatic switching device (24, 25) is connected in parallel to a manually manipulatable switch (23) for manually switching on and off the drive motor (15).

16. Installation according to one of the claims 10 to 15, characterized by a return line (37) connected directly or over an output line (18) to the bottom (16) of the tank for carrying out of the tank filter aid removed from the settling layers by the short-time switichings on of the drive motor (15) and sunk down to the bottom of the tank by sucking offf fluid from the bottom of the tank and for feeding this fluid sucked off and carrying along filter aid with itself to the fluid to be led into the tank (6) or above the filter elements (5) directly back to the tank (6), and further by pumping means (2) for effecting the lower pressure in the return line (37) in relation to the fluid pressure in the tank (6), which lower pressure is necessary for sucking off the fluid from the bottom of the tank.

17. Installation according to claim 16, characterized in that the return line (37) ends in the feeding line (1) leading to the filter pump (2) which forms also the pumping means for effecting said lower pressure in the return line.

18. Installation according to claim 16 or 17, characterized by a valve (38) with an adjustable flow resistance in the return line (37) for adjusting the quantity of fluid sucked off from the tank (6) per time unit.

## Revendications

1. Procédé d'exploitation d'une installation de filtration à couches comprenant un récipient filtrant à tube central disposé verticalement dans le récipient et susceptible d'être entraîné en rotation au moyen d'un moteur de commande et plusieurs éléments filtrants fixés en superposition mutuelle au tube central en étant disposés coaxialement à l'axe du tube et réalisés en tant que corps creux en forme de disques circulaires et placés en communication par leurs cavités avec l'intérieur du tube central, et pouvus de surfaces filtrantes à leurs faces supérieures planes, dans lequel procédé, on ajoute en mélange, à un liquide à traiter dans l'installation de filtration à couches et introduit dans le récipient et y parvenant à travers les surfaces filtrantes dans les cavités des éléments filtrants et s'évacuant de là par écoulement par le tube central, et avant l'introduction du liquide dans le récipient, un agent auxiliaire de filtrage se déposant sur les surfaces filtrantes sous forme d'une couche charriée, conjointement avec des constituants du liquide à extraire par filtrage ou à retirer du liquide introduit, caractérisé en ce que, pour l'obtention de couches charriées sur les éléments filtrants à épaisseur de couche sensiblement égale depuis le centre jusqu'à la périphérie des éléments filtrants ou pour éviter une formation d'épaississements, en forme de bourrelet, des couches charriées dans les zones périphériques des éléments filtrants, le moteur d'entraînement, prévu pour la rotation du tube central ainsi que des éléments filtrants fixés à celui-ci, est mis en marche pendant une courte durée en des intervalles de temps prédéterminés pendant une durée inférieure à 1% de l'intervalle de temps respectif précédent et, de ce fait, des épaississements des couches charriées, formés au cours de l'intervalle de temps precédent, sont enlevés dans les régions périphériques des éléments filtrants.

2. Procédé selon la revendication 1, caractérisé en ce que les mises en marche de courte durée du moteur d'entraînement ont lieu chaque fois pendant une durée inférieure à 1 pour mille, de préférence comprise entre 0,1 pour mille et 0,5 pour mille, de l'intervalle de temps précédent respectif.

3. Procédé selon la revendication 1 ou 2, caractérisé en ce que la durée des brèves mises en marche du moteur d'entraînement sont réglées de telle façon que l'impulsion de rotation, impartie par la mise en marche de courte durée du moteur d'entraînement au tube central ainsi qu'aux éléments filtrants fixés à celui-ci, provoque un à dix et de préférence trois à quatre tours du tube central et des éléments filtrants.

4. Procédé selon l'une des revendications 1 à 3, caractérisé en ce que des durées, dans le domaine compris entre 1 et 100 minutes et de préférence entre 30 et 60 minutes, sont choisies comme intervalles de temps entre les brèves mises en marche successives du moteur d'entraînement.

5. Procédé selon l'une des revendications 1 à 4,
caractérisé en ce que des durées, dans le domaine compris entre 0,1 et 10 secondes et de préférence entre 0,5 et 1 seconde, sont choisies comme durée des brèves mises en marche du moteur d'entraînement.

6. Procédé selon l'une des revendications 1 à 5, caractérisé en ce que le moteur d'entraînement est mis en marche en des intervalles de temps de même grandeur de préférence de 0,5 à 1 heure respectivement pendant des durées de mise en marche d'égale grandeur de préférence de 0,5 à 1 seconde.

7. Procédé selon l'une des revendications 1 à 6, caractérisé en ce que l'agent auxiliaire de filtrage, enlevé des couches charriées et descendu sur le fond de récipient, est évacué hors du récipient par aspiration de liquide du fond de récipient et ramené au récipient en un emplacement au-dessus des éléments filtrants, conjointement avec le liquide évacué par aspiration, de préférence par le fait que le liquide aspiré est amené au liquide à introduire dans le récipient.

8. Procédé selon la revendication 7, caractérisé en ce que la dépression, relativement à la pression de liquide dans le récipient, nécessaire à l'aspiration du liquide du fond de recipient, est produite par le fait que le liquide aspiré est amené au liquide à introduire dans le récipient, avant une pompe de filtration mettant en circulation le liquide à introduire et placée dans la conduite de retour de liquide au récipient.

9. Procédé selon la revendication 7 ou 8, caractérisé en ce que la quantité de liquide, aspirée par unité de temps, est dosée ou réglée de telle façon qu'elle représente une valeur comprise entre 5% et 20%, et de préférence environ 10% de la quantité de liquide amenée au récipient pendant la même unité de temps.

10. Installation pour l'exécution du procédé selon l'une des revendications 1 à 9, avec un récipient filtrant à tube central (10) disposé verticalement dans le récipient (6) et susceptible d'être entraîné en rotation au moyen d'un moteur de commande électrique et avec plusieurs éléments filtrants fixés en superposition mutuelle au tube central en étant disposés coaxialement à l'axe du tube et réalisés en tant que corps creux en forme de disques circulaires et placés en communication par leurs cavités avec l'intérieur du tube central, et pourvus de surfaces filtrantes à leurs faces planes supérieures, avec un dispositif de dosage (8) pour l'emmagasinage et l'amenée de l'agent auxiliaire de filtrage au liquide à introduire dans le récipient ainsi de préférence qu'avec une pompe de filtration (2), placée dans l'amenée de liquide au récipient, pour l'entraînement du liquide à introduire dans le récipient et en outre avec de préférence un accouplement hydraulique (14) entre moteur d'entraînement et tube central, caractérisée par un système de commande automatique (24, 25; 27, 28, 29), située dans l'alimentation en courant électrique (20) du moteur d'entraînement (15), pour la mise en marche automatique de courte durée du moteur d'entraînement en des intervalles de temps prédéterminés pendant une durée inférieure à 1% et de préférence inférieure à 1 pour mille de l'intervalle de temps précédent respectif.

11. Installation selon la revendication 10, caractérisée par une structure telle du système de commande automatique (24, 25; 27, 28, 29) que les intervalles de temps, entre les mises en marche de courte durée du moteur d'entraînement (15) et/ou la durée de ces brèves mises en marche sont réglables à l'intérieur de limites de domaine prédéterminées.

12. Installation selon la revendication 10 ou 11, caractérisée en ce que le système de commande automatique (24, 25; 27, 28, 29) comprend un commutateur électronique (24; 28) et un organe électronique de pilotage (25; 29) pour le pilotage de celui-ci ainsi que de préférence des moyens (26, 31) pour l'amenée de la fréquence de réseau, d'un réseau de courant électrique alternatif (21) servant de source de courant électrique pour le moteur d'entraînement (15), en tant que normale de temps à l'organe de pilotage et en ce que l'organe électronique de pilotage (24, 28) est pourvu d'un montage diviseur de fréquence (32) réalisé de préférence sous forme de compteur électronique et d'un réseau logique (33, 35) piloté par celui-ci pour la production de signaux de commande assurant une commutation du commutateur électronique pendant les brèves durées de mise en marche du moteur d'entraînement au cours des intervalles de temps prédéterminés.

13. Installation selon la revendication 12, caractérisée en ce qu'un compteur binaire électronique à 18 étages (32), recevant la fréquence de réseau du côté de l'entrée, est prévu comme montage diviseur de fréquence et un circuit »OU« (33) à 13 entrées qui sont connectées aux sorties des 13 derniers étages du compteur binaire (32) ainsi qu'un inverseur (35) dans la ligne de connexion de sortie (34) du circuit »OU« (33) sont prévus comme réseau logique.

14. Installation selon la revendication 12 ou 13, caractérisé en ce que le système de commande (27, 28, 29) comprend additionnellement un émetteur de signaux (27) actionnable à la main pour la mise en et hors circuit manuelle du commutateur électronique (28).

15. Installation selon l'une des revendications 10 à 13, caractérisée en ce que le système de commande automatique (24, 25) est connecté parallèlement à un interrupteur (23) actionnable à la main pour la mise en marche et l'arrêt manuels du moteur d'entraînement (15).

16. Installation selon l'une des revendications 10 à 15, caractérisée par une conduite de retour (37), raccordée au fond de récipient (16) directement ou par l'intermédiaire d'une conduite d'évacuation (18), pour l'évacuation, hors du récipient par aspiration de liquide du fond de récipient, d'agent auxiliaire de filtrage détaché des couches charriées par les brèves mises en marche du moteur d'entraînement (15) et descendu sur le fond de récipient, ainsi que pour l'amenée de ce liquide aspiré, entraînant de l'agent auxiliaire de filtrage, au liquide à introduire dans le récipient (6) ou le ramener au-dessus des éléments filtrants (5) directement dans le récipient (6) et, en outre, par des moyens de pompage (2) pour la production de la dépression, nécessaire pour l'aspiration du liquide du fond de récipient, dans la conduite de retour (37) relativement à la pression de liquide, dans le récipient (6).

17. Installation selon la revendication 16, caractérisée en ce que la conduite de retour (37) débouche dans la conduite d'amenée (1) à la pompe de filtrage (2) formant aussi les moyens de pompage pour la production de la dépression dans la conduite de retour.

18. Installation selon la revendication 16 ou 17, caractérisée par une vanne (38) à résistance réglable à l'écoulement dans la conduite de retour (37) pour le réglage de la quantité de liquide aspirée hors du récipient (6) par unité de temps.

Fig. 1

0 033 370

Fig. 2

Fig. 3

Fig. 4

Fig. 5